# EUROPEAN PATENT SPECIFICATION

(11) **EP 3 835 607 B1**
(45) Date of publication and mention of the grant of the patent: **12.07.2023**
(21) Application number: 19214796.5
(22) Date of filing: 10.12.2019
(51) Int. Cl.: F16C 35/067, H02K 5/15, H02K 5/173, F16C 19/00, F16C 33/72

(54) **ROTATING ELECTRIC MACHINE**
ELEKTRISCHE DREHMASCHINE
MACHINE ÉLECTRIQUE ROTATIVE

(43) Date of publication of application: 16.06.2021
(73) Proprietor: Weg Equipamentos Elétricos S.A., 89256-900 Jaraguá do Sul, SC (BR)
(72) Inventor: ADILSON PASSIG, Jhonatan, 89254800 JARAGUA DO SUL, SC (BR); LAFIN, Patrick, 89254800 JARAGUA DO SUL, SC (BR); VALENTINI, Jean Carlos, 89265202 JARAGUA DO SUL, SC (BR)
(74) Representative: Cabinet Beaumont

(56) References cited:
- EP-A1- 3 591 813
- DE-A1-102010 038 990
- JP-A- 2016 164 445
- US-A- 4 957 328
- US-A- 5 080 501
- US-A1- 2014 144 264

## Description

### FIELD OF THE INVENTION

The present invention relates to a rotating electric machine, and more specifically, to a rotating electric machine having a rolling bearing retaining ring.

### BACKGROUND OF THE INVENTION

Several different types of electrical machine casings are known in the art, which basically comprise a housing that houses parts and components of the machine.

As is well known to those skilled in the art, the housing is adapted to house a number of internal components and also to receive a number of external accessories and components which are secured to the housing by different fastening systems.

One of the fasteners commonly used in electrical machine housings is rolling bearing retaining rings.

Rolling bearing retaining rings are parts used to axially lock the bearing in the machine housing. Generally, at least one bearing ring is used, being common the use of at least one inner and one outer ring, on each of the front and rear bearings of the machine. The bearing rings are fixed by screws to the housing.

Document EP 3 591 813 A1 discloses a rotating electric machine of the type comprising a shell housing an active core with a rotor and a stator, the rotor being mounted on a shaft, wherein the shell comprises an end portion shaped as an interchangeable flange receiving interface and configured to receive an interchangeable flange.

Document US 5 080 501 A discloses a hanger bearing assembly comprising a hanger plate having a hole therethrough and adapted to be suspended from a support. A bearing having an outer surface complementary to the hole is located therein. A resilient radially compressible bayonet lock, substantially in the shape of a ring, has a bearing surface which is at least partially in contact with the adjacent surface of either the bearing or the hanger plate.

Document US 2014/144264 A1 discloses a device for releasing a securing screw for a unit in a housing, in particular a pinion unit in a steering gear of a motor vehicle, the securing screw is connected via an external thread to an internal thread in the housing, wherein the securing screw is provided with a latching device.

### OBJECTS OF THE INVENTION

It is an object of the present invention to provide an electric machine bearing fastening solution that reduces the time and amount of operations for the rotating electric machine assembly process.

It is another object of the present invention to provide a rotating electric machine bearing fastening solution that can be used with rolling bearings of different sizes.

It is yet another object of the present invention to provide a rotating electric machine bearing fastening solution that allows the rolling bearing to be fixed simply and safely.

It is yet another object of the present invention to provide a bearing retaining ring that is mounted to the rotating machine housing without the need for screws.

It is a further object of the present invention to provide a bearing retaining ring which is mounted to the housing of the machine by means of a snap-fit or by a mechanical stop pressure fit.

### BRIEF DESCRIPTION OF THE INVENTION

The present invention relates to a rotating electric machine of the type comprising a housing that houses an active core with a rotor and a stator, the rotor being mounted on a shaft, wherein the machine includes a rolling bearing retaining ring fastening system comprising a rolling bearing retaining ring with a body portion having a hole for passage of the electrical machine shaft, the body portion comprising at least one guiding engaging means and at least one pressure engaging means; and a retaining ring receiving portion formed at one of the ends of the housing, the retaining ring receiving portion comprising at least one guiding engaging means configured to receive the corresponding guiding engaging means of the rolling bearing retaining ring and at least one pressure engaging means configured to cooperate with the corresponding pressure engaging means of the rolling bearing retaining ring.

The body of the rolling bearing retaining ring comprises a rear surface, and the at least one guiding engaging means comprises an elongated projection protruding from the rear surface of the body and creating a spacing between the elongated projection and the rear surface. In this embodiment, the at least one guiding engaging means of the retaining ring receiving portion comprises an elongated opening formed in a wall of the retaining ring receiving portion, the elongated opening being configured to receive the elongated projection of the rolling bearing retaining ring.

The body of the rolling bearing retaining ring is a circular body and the elongated projection extends in a curve that partially follows the circumference of the circular body. In this embodiment, the elongated opening is a curved elongated opening corresponding to the elongated projection.

The at least one pressure engaging means of the rolling bearing retaining ring comprises a protuding tab disposed on the outer circumference of the circular body, and the pressure engaging of the retaining ring receiving portion of the housing comprises a shoulder that cooperates with the protruding tab. The protruding tab may have an inclined lower surface which cooperates with a corresponding inclined upper surface of the shoulder.

The rolling bearing retaining ring has four spaced apart elongated projections and the rolling bearing retaining ring receiving portion of the housing comprises four corresponding elongated openings.

The rolling bearing retaining ring comprises a circular wall concentric with the shaft passage hole so as to abut against an inner surface of shaft passage hole of the rolling bearing retaining ring receiving portion.

The retaining ring receiving portion of the housing comprises a first circular surface formed at an edge of a hole for the passage of shaft of the machine and a second circular surface formed adjacent the first circular surface and forming a step with the first circular surface. In that embodiment, the elongated openings are formed on the first circular surface and the shoulder is formed on the second circular surface.

### BRIEF DESCRIPTION OF THE DRAWINGS

The present invention will be described in more detail below with reference to the accompanying drawings in which:
**Figure 1** is a perspective view of a rotating electric machine according to the present invention;
**Figure 2** is a perspective view of a rotating electric machine according to the present invention, wherein the retaining ring and the rolling bearing are shown in exploded configuration;
**Figure 3** is a rear perspective view of a rolling bearing retaining ring according to the present invention;
**Figure 4** is a side view of a rolling bearing retaining ring according to the present invention;
**Figure 5** is a front view of a rolling bearing retaining ring according to the present invention.
**Figure 6** is a perspective view of the front of a rotating electric machine according to the present invention;
**Figure 7** is a front view of the front of a rotating electric machine in accordance with the present invention;
**Figure 8** is a schematic illustration of the assembly of the rolling bearing retaining ring of the present invention to the housing of a rotating electric machine according to the present invention;
**Figure 9** is a rear perspective view of a rolling bearing retaining ring in accordance with an embodiment of the present invention;
**Figure 10** is a perspective view of an electric machine according to one embodiment of the present invention, wherein the retaining ring is shown in exploded configuration;
**Figure 11** is a top and rear perspective view of a rolling bearing retaining ring in accordance with an embodiment of the present invention;
**Figure 12** is a perspective view of an electric machine according to one embodiment of the present invention, wherein the retaining ring is shown in exploded configuration;
**Figure 13** is a rear top perspective view of a rolling bearing retaining ring in accordance with an embodiment of the present invention; and
**Figure 14** is a rear perspective view of a rolling bearing retaining ring in accordance with an embodiment of the present invention.

### DETAILED DESCRIPTION OF THE INVENTION

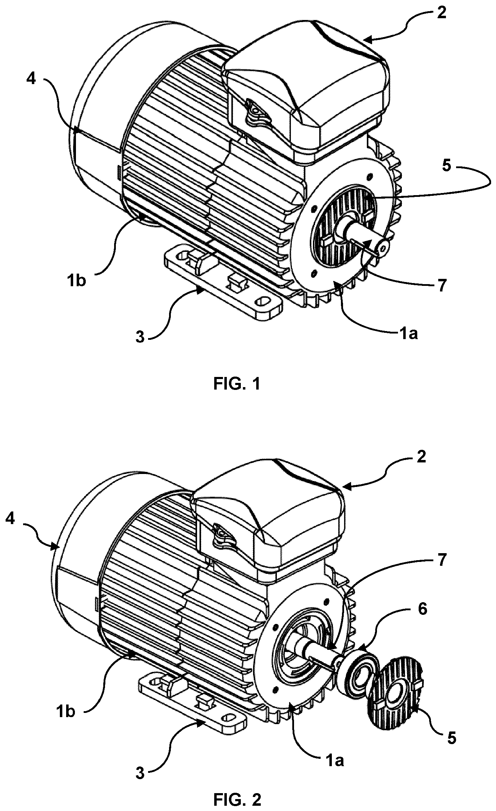

Figures 1 and 2 show an electric machine incorporating a rolling bearing ring fastening system in accordance with one embodiment of the present invention.

Although the present invention is described embodied in an electric motor, it should be understood that the solution of the present invention could equally be applied to other electrical machines comprising a housing, such as any rotating electric machine having such features.

As can be seen in Figure 1, the electric motor comprises an axially split housing, formed by a first housing part 1a and a second housing part 1b.

It should be noted, however, that the present invention could be embodied in electrical machines with housings with different design features, such as, for example, one integral body with end caps. Thus, the term "end of the housing " as used herein is to be understood as encompassing an end of a continuous body housing end or an end formed by a cover that closes a housing body.

As is well known to those skilled in the art, a motor housing houses a number of internal components and receives a number of external accessories and components which are secured to the housing by different fastening systems. Thus, as external components, the electrical machine of FIG. 1 has a terminal box 2, a foot 3 and a deflector cover 4. The operation of these components in an motor is known to those skilled in the art, so it will not be described in detail here .

The electric machine of the present invention further comprises a retaining ring 5 for retaining a rolling bearing 6 (see Figure 2, where the ring 5 and the rolling bearing 6 are shown in exploded configuration).

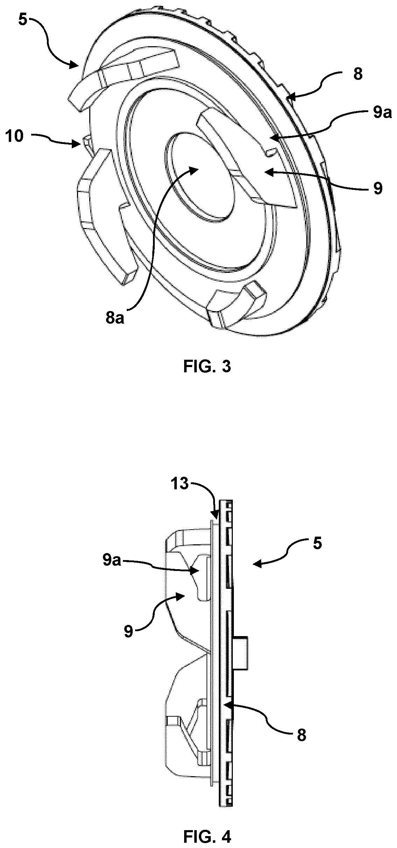

As best illustrated in Figures 3 to 5, the retaining ring 5 comprises a body portion 8 with a central hole 8a for the passage of the shaft 7 of the electrical machine.

The body portion of the rolling bearing retaining ring comprises at least one guiding engaging means 9 and at least one pressure (snap-fit) engaging means 10.

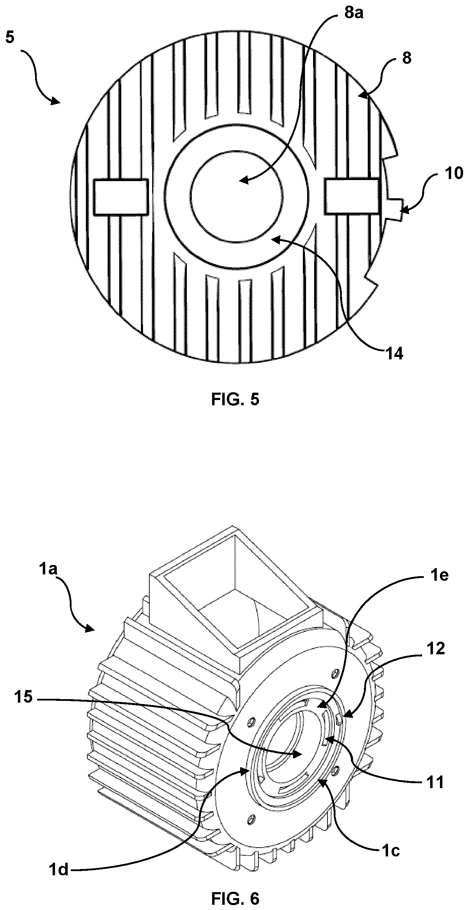

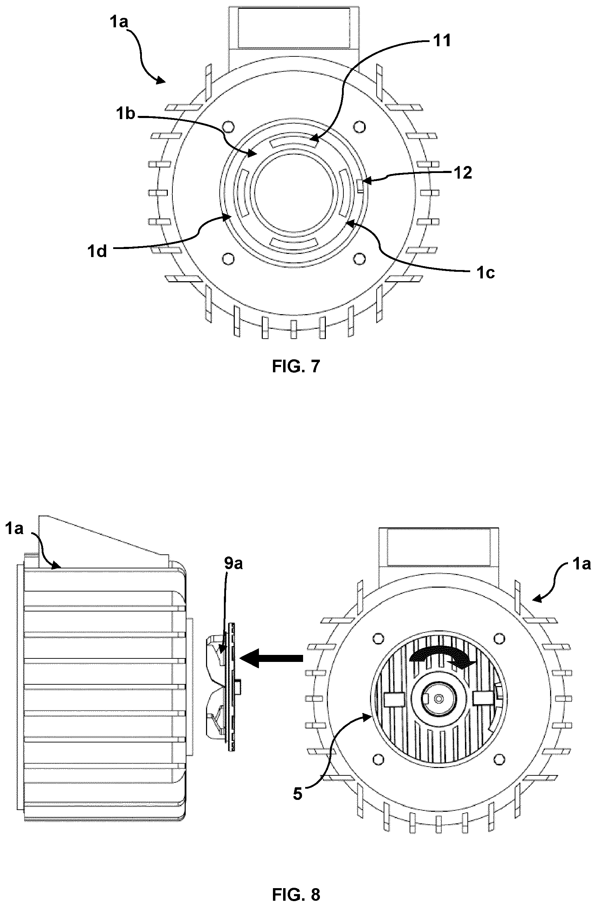

As best illustrated in FIGS. 6 and 7, the housing 1a has, formed at its end, a rolling bearing retaining ring receiving portion. The receiving portion comprises at least one guiding engaging means 11 configured to receive the corresponding guiding engaging means 9 of rolling bearing retaining ring 5 and at least one pressure (snap-fit) engaging means 12 configured to receive the corresponding pressure engaging means 10 of the rolling bearing retaining ring 5.

In the embodiment of the invention shown in figures 1 to 8, the rolling bearing retaining ring 5 comprises a substantially flat circular body 8, and the at least one guiding means comprises an elongated projection 9 projecting from a rear surface of the body 8. As best illustrated in FIGS. 3 and 4, the elongated projection 9 extends in a curve that partially follows the circumference of the circular body 8, forming a spacing 9a between elongated projection 9 and the rear surface of the body 8.

In this embodiment, the guiding engaging means 11 of the rolling bearing retaining ring receiving portion of the housing 1a comprises a curved elongated opening 11 configured and sized to receive the elongated projection 9.

As schematically illustrated in Figure 8, this configuration allows that, by rotating the retaining ring 5 clockwise, a wall portion of the end of the housing 1a is received by the spacing 9a, locating the retaining ring in place. Naturally, in embodiments of the invention, the retaining ring 5 could be rotated counterclockwise.

As shown in the figures, in one embodiment of the invention, the rolling bearing retaining ring 5 has four spaced apart elongated projections 9 and the rolling bearing retaining ring receiving portion of the housing 1a comprises four corresponding curved elongated openings 11.

As best illustrated in Figure 5, the snap-fit engaging means 10 of the rolling bearing retaining ring 5 comprises a protruding tab 10 on the outer circumference of the body 8. The protruding tab 10 may be formed by a cutout in the circular flat portion of the body 8, as in the embodiment shown in the figures. Naturally, any other shape could be used, provided that a snap-fit portion is formed cooperating with a corresponding snap-fit portion of the housing 1a.

Snap-fit means 12 of the rolling bearing retaining ring receiving portion of the housing 1a comprises a shoulder 12 which cooperates with the protruding tab 10 of the rolling bearing retaining ring 5.

In the embodiment shown in the figures, the protruding tab 10 has an inclined lower surface cooperating with an inclined upper surface of the shoulder 12.

As best illustrated in Figure 6, in one embodiment of the invention, the retaining ring receiving portion of the housing 1a comprises a first circular surface 1e formed at the edge of the shaft receiving hole of the housing 1a and a second circular surface 1c formed adjacent the first circular surface 1e, forming a step between the first and second circular surfaces 1e and 1c. In that embodiment, the elongated openings 11 are formed on the first circular surface 1e and the shoulder 12 is formed on the second circular surface 1c.

As is also best shown in Figure 6, the retaining ring receiving portion of the housing may further comprise a first circular edge 1d which internally accommodates the outer circumference of the body 8 of the rolling bearing retaining ring 5.

The rolling bearing retaining ring 5 is preferably formed of polymeric material. Of course, other materials could be used, such as a metallic material.

As best illustrated in Figures 4 and 5, the rear surface of the body 8 may further comprise a circular recess 13 for accommodating a sealing ring, and the front surface of the body 8 of the rolling bearing retaining ring 5 may comprise a circular recess 14 to accommodate another sealing ring.

The present invention achieves a rolling bearing retaining ring fastening system which allows for safe and simple mounting of the ring.

As schematically illustrated in Figure 8, to assemble the ring, the ring projections 9 are inserted into the openings 11 of the housing by an axial movement (left arrow), so that an axial force is exerted on the bearing. Then the retaining ring is rotated (right arrow), and a snap-fit engagement is achieved by cooperation between the protruding tab 10 and the shoulder 12.

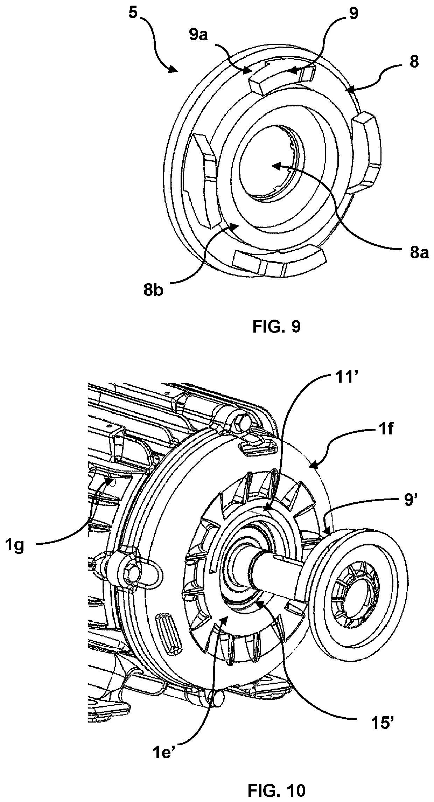

Figure 9 illustrates another embodiment of the rolling bearing retaining ring according to the present invention.

Similarly, to the embodiment shown in Figures 1 to 8, the rolling bearing retaining ring 5 comprises a substantially flat circular body 8, and the at least one guiding engaging means comprises an elongated projection 9 projecting from a rear surface of the body 8. The elongated projection 9 extends in a curve that partially follows the circumference of the circular body 8, forming a spacing 9a between elongated projection 9 and the rear surface of the body 8.

In the embodiment shown in figure 9, the body 8 further comprises a circular wall 8b, concentric to central hole 8a. The circular wall 8b may rest against the inner cylindrical surface of the shaft receiving hole 15 of the housing 1a (see figure 6).

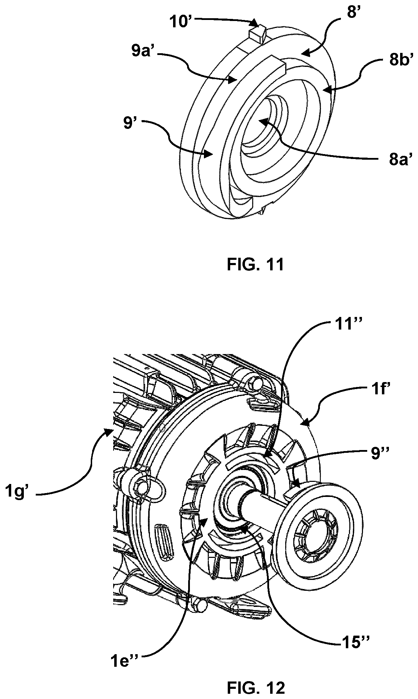

Figures 10 and 11 show another embodiment of the present invention. In this embodiment, the rolling bearing retaining ring has a single elongated projection 9 which fits into a single elongated curved opening 11' of the retaining ring receiving portion. In the illustrated embodiment, the end of the housing is formed by the lid 1f which closes the cylindrical body 1g of the housing.

The retaining ring receiving portion of the housing is formed in the lid 1f and comprises a first circular surface 1' formed at the edge of the shaft receiving hole. The elongated aperture 11' is formed on this first circular surface 1e'.

As in the embodiment of Fig. 9, the body 8' further comprises a circular wall 8b', concentric with the central hole 8a', so that the circular wall 8b' may rest against the inner cylindrical surface of the shaft receiving hole 15 'of the lid 1f.

Similarly to the embodiments shown in figures 1 to 9, to mount the ring, the projection 9' of the ring is inserted into the opening 11' of the lid 1f by an axial movement, so that an axial force is exerted on the bearing.. Then the locking ring is rotated, whereby a snap-fit is achieved by the cooperation between locking 10' and a corresponding shoulder in the retaining ring receiving portion of the housing. Also analogous to the embodiments shown in figures 1 to 9, a spacing 9a' is formed between elongated projection 9' and body 8'.

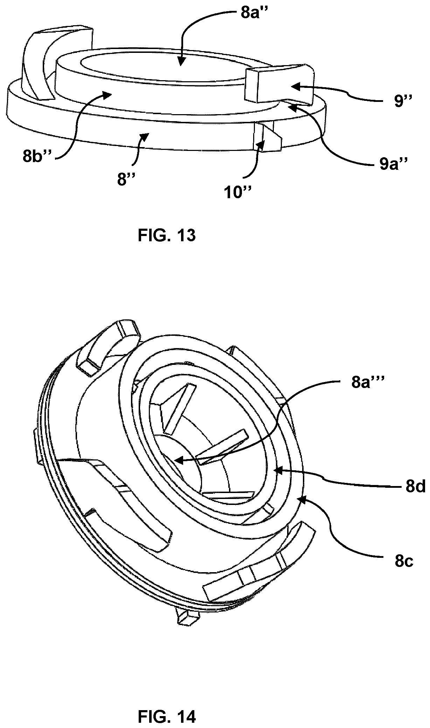

Figures 12 and 13 show another embodiment of the present invention. In that embodiment, the rolling bearing retaining ring has two elongated projections 9" which fit into two elongated curved openings 11" of the retaining ring receiving portion of the housing. In the illustrated embodiment, the end of the housing is formed by the lid 1f' which closes the cylindrical body 1g' of the housing.

The retaining ring receiving portion is formed in the lid 1f' and comprises a first circular surface 1e" formed at the edge of the shaft receiving hole of the housing. The elongated openings 11 " are formed on this first circular surface 1e ".

As in the embodiment of Figure 11, the body 8" further comprises a circular wall 8b", concentric with the central hole 8a ", so that the circular wall 8b" may rest against the inner cylindrical surface of the hole 15 'of the cover 1f'.

Similarly to the embodiments shown in the other figures, to mount the ring, the projections 9 " of the ring are inserted into the openings 11 " of the lid 1f 'by an axial movement, so that an axial force is exerted on the bearing. Then the ring is rotated, whereby a snap-fit is achieved by the cooperation between locking 10 " and a corresponding shoulder in the ring receiving portion of the housing. Also analogous to the embodiments shown in the other figures, a spacing 9a" is formed between the elongated projection 9" and the body 8 ".

Figure 14 shows another embodiment of the present invention. In this embodiment, the rolling bearing retaining ring has, in addition to the elongated projections that fit into four elongated curved openings of the retaining ring receiving portion of the housing, two circular walls 8c and 8d, concentric with the central bore 8a'", which act as ests when using double bearings.

Having described an exemplary embodiment of the present invention, it should be understood that the scope of the present invention encompasses other possible variations of the inventive concept described, being limited only by the content of the appended claims.

## Claims

1. Rotating electric machine of the type comprising a housing (1a, 1b) that houses an active core with a rotor and a stator, the rotor being mounted on a shaft (7), wherein the machine comprises a rolling bearing retaining ring (5) fasting system comprising:
a rolling bearing retaining ring (5) comprising a body portion (8) with a hole (8a) for the passage of the electric machine shaft (7); the body portion comprising at least one guiding engaging means (9) and at least one pressure engaging means (10); and
a retaining ring receiving portion formed at one end of the housing (1a), the retaining ring receiving portion comprising at least one guiding engaging means (11) configured to receive the corresponding guiding engaging means (9) of the rolling bearing retaining ring (5) and at least one pressure engaging means (12) configured to cooperate with the corresponding pressure engaging means (10) of the rolling bearing retaining ring (5); wherein
the body (8) of the rolling bearing retaining ring (5) comprises a rear surface, and the at least one guiding engaging means (9) comprises at least one elongated projection protruding from the rear surface of the body (8) and creating a spacing (9a) between the at least one elongated projection and the rear surface of the body (8);
the at least one guiding engaging means (11) of the retaining ring receiving portion comprises an elongated opening (11) formed in a wall of the retaining ring receiving portion, the elongated opening (11) being configured to receive the elongated projection of the rolling bearing retaining ring (5);
the body (8) is a circular body, the elongated projection extends in a curve partially following a circumference of the circular body (8), and the elongated opening (11) is a curved elongated opening (11);
the at least one pressure engaging means (10) of the rolling bearing retaining ring (5) comprises a protruding tab on the outer circumference of the circular body (8), and the pressure engaging means (12) of the retaining ring receiving portion of the housing (1a) comprises a shoulder cooperating with the protruding tab; and
the rolling bearing retaining ring (5) has four spaced apart elongated projections (9) and the retaining ring receiving portion of the housing. (1a) comprises four corresponding elongated openings (11).
wherein the retaining ring receiving portion of the housing (1a) comprises a first circular surface (1e) formed on an edge of a shaft (7) passage hole of the machine and a second circular surface (1c) formed adjacent the first circular surface (1e) and forming a step with the first circular surface (1e), and wherein the elongated openings (11) are formed on the first circular surface (1) and the shoulder is formed on the second circular surface (1c).

2. Machine according to claim 1, **characterized in that** the protruding tab has an inclined lower surface that cooperates with a corresponding inclined upper surface of the shoulder.

3. Machine according to any one of claims 1 or 2 **characterized in that** the housing is formed by a first housing part (1a) and a second housing part (1b), and the end of the housing is the end of the first housing part (1a).

4. Machine according to any one of claims 1 or 2, **characterized in that** the housing is formed by a body portion (1g) closed by at least one end cap (1f), and the end of the housing is the end cap (1f).

## Patentansprüche

1. Rotierende elektrische Maschine des Typs mit einem Gehäuse (1a, 1b), das einen aktiven Kern mit einem Rotor und einem Stator aufnimmt, wobei der Rotor an einer Welle (7) angebracht ist, wobei die Maschine ein Befestigungssystem für einen Wälzlagerhaltering (5) aufweist, das Folgendes aufweist:
einen Wälzlagerhaltering (5), der einen Körperabschnitt (8) mit einem Loch (8a) für den Durchgang der Welle (7) der elektrischen Maschine aufweist; wobei der Körperabschnitt mindestens ein Führungseingriffsmittel (9) und mindestens ein Druckeingriffsmittel (10) aufweist; und
einen Haltering-Aufnahmeabschnitt, der an einem Ende des Gehäuses (1a) ausgebildet ist, wobei der Haltering-Aufnahmeabschnitt mindestens ein Führungseingriffsmittel (11) aufweist, das konfiguriert ist zum Aufnehmen des entsprechenden Führungseingriffsmittels (9) des Wälzlagerhalterings (5), und mindestens ein Druckeingriffsmittel (12), das konfiguriert ist zum Zusammenwirken mit dem entsprechenden Druckeingriffsmittel (10) des Wälzlagerhalterings (5); wobei
der Körper (8) des Wälzlagerhalterings (5) eine Rückseite aufweist und das mindestens eine Führungseingriffsmittel (9) mindestens einen länglichen Vorsprung aufweist, der von der Rückseite des Körpers (8) vorsteht und einen Abstand (9a) zwischen dem mindestens einen länglichen Vorsprung und der Rückseite des Körpers (8) erzeugt;
das mindestens eine Führungseingriffsmittel (11) des Haltering-Aufnahmeabschnitts eine längliche Öffnung (11) aufweist, die in einer Wand des Haltering-Aufnahmeabschnitts ausgebildet ist, wobei die längliche Öffnung (11) konfiguriert ist zum Aufnehmen des länglichen Vorsprungs des Wälzlagerhalterings (5);
der Körper (8) ein kreisförmiger Körper ist, der langgestreckte Vorsprung sich in einer Kurve erstreckt, die teilweise einem Umfang des kreisförmigen Körpers (8) folgt, und die langgestreckte Öffnung (11) eine gekrümmte langgestreckte Öffnung (11) ist;
das mindestens eine Druckeingriffsmittel (10) des Wälzlagerhalterings (5) eine vorstehende Lasche am Außenumfang des kreisförmigen Körpers (8) aufweist und das Druckeingriffsmittel (12) des Haltering-Aufnahmeabschnitts des Gehäuses (1a) eine mit der vorstehenden Lasche zusammenwirkende Schulter aufweist; und
der Wälzlagerhaltering (5) vier voneinander beabstandete längliche Vorsprünge (9) aufweist und der Haltering-Aufnahmeabschnitt des Gehäuses (1a) vier entsprechende längliche Öffnungen (11) aufweist;
wobei der den Haltering aufnehmende Abschnitt des Gehäuses (1a) eine erste kreisförmige Fläche (1e) aufweist, die an einer Kante eines Wellendurchgangslochs (7) der Maschine ausgebildet ist, und eine zweite kreisförmige Fläche (1c), die angrenzend an die erste kreisförmige Fläche (1e) ausgebildet ist und eine Stufe mit der ersten kreisförmigen Fläche (1e) bildet, und wobei die länglichen Öffnungen (11) an der ersten kreisförmigen Fläche (1) ausgebildet sind und die Schulter an der zweiten kreisförmigen Fläche (1c) ausgebildet ist.

2. Maschine nach Anspruch 1, **dadurch gekennzeichnet, dass** die vorstehende Lasche eine schräge Unterseite aufweist, die mit einer entsprechenden schrägen Oberseite der Schulter zusammenwirkt.

3. Maschine nach einem der Ansprüche 1 oder 2, **dadurch gekennzeichnet, dass** das Gehäuse aus einem ersten Gehäuseteil (1a) und einem zweiten Gehäuseteil (1b) gebildet ist und dass das Ende des Gehäuses das Ende des ersten Gehäuseteils (1a) ist.

4. Maschine nach einem der Ansprüche 1 oder 2, **dadurch gekennzeichnet, dass** das Gehäuse durch ein Körperteil (1g) gebildet wird, das mit mindestens einer Endkappe (1f) verschlossenen ist, und das Ende des Gehäuses die Endkappe (1f) ist.

## Revendications

1. Machine électrique rotative du type comprenant un carter (1a, 1b) qui abrite un noyau actif avec un rotor et un stator, le rotor étant monté sur un arbre (7), dans laquelle la machine comprend un système de fixation à bague de retenue à roulement à billes (5) comprenant :
une bague de retenue à roulement à billes (5) comprenant une partie de corps (8) ayant un orifice (8a) pour le passage de l'arbre de la machine électrique (7) ; la partie de corps comprenant au moins un moyen d'engagement de guidage (9) et au moins un moyen d'engagement par pression (10) ; et
une partie de réception de la bague de retenue formée au niveau d'une extrémité du carter (1a), la partie de réception de la bague de retenue comprenant au moins un moyen d'engagement de guidage (11) configuré pour recevoir le moyen d'engagement de guidage correspondant (9) de la bague de retenue à roulement à billes (5) et au moins un moyen d'engagement par pression (12) configuré pour coopérer avec le moyen d'engagement par pression correspondant (10) de la bague de retenue à roulement à billes (5) ; dans laquelle
le corps (8) de la bague de retenue à roulement à billes (5) comprend une surface arrière, et l'au moins un moyen d'engagement de guidage (9) comprend au moins une saillie allongée saillant à partir de la surface arrière du corps (8) et créant un espacement (9a) entre l'au moins une saillie allongée et la surface arrière du corps (8) ;
l'au moins un moyen d'engagement de guidage (11) de la partie de réception de la bague de retenue comprend une ouverture allongée (11) formée dans une paroi de la partie de réception de la bague de retenue, l'ouverture allongée (11) étant configurée pour recevoir la saillie allongée de la bague de retenue à roulement à billes (5) ;
le corps (8) est un corps circulaire et la saillie allongée s'étend selon une courbe suivant partiellement une circonférence du corps circulaire (8), et l'ouverture allongée (11) est un ouverture allongée incurvée (11) ;
l'au moins un moyen d'engagement par pression (10) de la bague de retenue à roulement à billes (5) comprend une patte saillante sur la circonférence extérieure du corps circulaire (8), et le moyen d'engagement par pression (12) de la partie de réception de la bague de retenue du carter (1a) comprend un épaulement coopérant avec la patte saillante ; et
la bague de retenue à roulement à billes (5) a quatre saillies allongées espacées (9) et la partie de réception de la bague de retenue du carter (1a) comprend quatre ouvertures allongées correspondantes (11),
dans laquelle
la partie de réception de la bague de retenue du carter (1a) comprend une première surface circulaire (1e) formée sur un bord d'un orifice de passage (7) de l'arbre de la machine et une deuxième surface circulaire (1c) formée adjacente à la première surface circulaire (1e) et formant une marche avec la première surface circulaire (1e), et dans laquelle les ouvertures allongées (11) sont formées sur la première surface circulaire (1) et l'épaulement est formé sur la deuxième surface circulaire (1c).

2. Machine selon la revendication 1, **caractérisée en ce que** la patte saillante a une surface inférieure inclinée qui coopère avec une surface supérieure inclinée correspondante de l'épaulement.

3. Machine selon l'une quelconque des revendications 1 ou 2, **caractérisée en ce que** le carter est formé par une première partie de carter (1a) et une deuxième partie de carter (1b), et l'extrémité du carter est l'extrémité de la première partie de carter (1a).

4. Machine selon l'une quelconque des revendications 1 ou 2, **caractérisée en ce que** le carter est formé par une partie de corps (1g) fermée par au moins un embout (1f), et l'extrémité du carter est l'embout (1f).
